(19) Europäisches Patentamt
European Patent Office
Office européen des brevets

(11) **EP 4 328 992 A1**

(12) **EUROPEAN PATENT APPLICATION**
published in accordance with Art. 153(4) EPC

(43) Date of publication:
**28.02.2024 Bulletin 2024/09**

(51) International Patent Classification (IPC):
*H01M 4/13* (2010.01)          *H01M 4/133* (2010.01)
*H01M 4/36* (2006.01)          *H01M 4/38* (2006.01)
*H01M 4/48* (2010.01)          *H01M 4/587* (2010.01)
*H01M 4/62* (2006.01)

(21) Application number: **22791599.8**

(22) Date of filing: **06.04.2022**

(52) Cooperative Patent Classification (CPC):
**H01M 4/13; H01M 4/133; H01M 4/36; H01M 4/38;
H01M 4/48; H01M 4/587; H01M 4/62;** Y02E 60/10;
Y02P 70/50

(86) International application number:
**PCT/JP2022/017158**

(87) International publication number:
**WO 2022/224824 (27.10.2022 Gazette 2022/43)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **21.04.2021   JP 2021071869**

(71) Applicant: **Panasonic Energy Co., Ltd.
Osaka 570-8511 (JP)**

(72) Inventor: **SAKAMOTO Kyohei
Kadoma-shi, Osaka 571-0057 (JP)**

(74) Representative: **Novagraaf International SA
Chemin de l'Echo 3
1213 Onex, Geneva (CH)**

(54) **NON-AQUEOUS ELECTROLYTE SECONDARY BATTERY**

(57)    Provided is a non-aqueous electrolyte secondary battery that has improved cycle characteristics. According to one aspect of the present disclosure, a non-aqueous electrolyte secondary battery comprises: an electrode body that includes a positive electrode and a negative electrode; and a packaging body that houses the electrode body and a non-aqueous electrolyte. The negative electrode includes a negative electrode collector and a negative electrode mixture layer that is formed on the surface of the negative electrode collector. The negative electrode mixture layer contains: a negative electrode active material that includes a carbon-based active material and a silicon-based active material; and carbon nanotubes. The G/D ratio obtained by Raman spectroscopy of the carbon nanotubes is 40-130.

Figure 1

**EP 4 328 992 A1**

**Description**

TECHNICAL FIELD

The present disclosure relates to a non-aqueous electrolyte secondary battery.

BACKGROUND ART

From the viewpoint of higher capacity of a secondary battery, use of a silicon-based active material including silicon (Si) that may absorb more lithium ions per unit mass compared with a carbon-based active material, such as graphite, has been investigated in recent years as a negative electrode active material included in a negative electrode mixture layer. However, the silicon-based active material changes its volume due to absorption of lithium ions more largely as compared with the carbon-based active material, and thereby a conductive path in the negative electrode mixture layer may be lost with repeated charge and discharge to deteriorate cycle characteristics.

Patent Literature 1 discloses a secondary battery including carbon nanotube in a negative electrode mixture layer from the viewpoint of improvement of the cycle characteristics. Patent Literature 1 describes that, in a Raman spectrum, a ratio of an intensity of a G band to an intensity of a D band (G/D ratio) of the carbon nanotube is preferably greater than or equal to 1 and less than or equal to 16.

CITATION LIST

PATENT LITERATURE

PATENT LITERATURE 1: International Publication No. 2017/007013

SUMMARY

TECHNICAL PROBLEM

The present inventors have made intensive investigation, and consequently found that cycle characteristics of the battery are not sufficiently improved when the G/D ratio of the carbon nanotube included in the negative electrode mixture layer is greater than or equal to 1 and less than or equal to 16. The art disclosed in Patent Literature 1 still has a room for improvement of the cycle characteristics.

It is an object of the present disclosure to provide a non-aqueous electrolyte secondary battery having improved cycle characteristics.

SOLUTION TO PROBLEM

A non-aqueous electrolyte secondary battery of an aspect of the present disclosure comprises: an electrode assembly including a positive electrode and a negative electrode; and an exterior housing the electrode assembly and a non-aqueous electrolyte, wherein the negative electrode has a negative electrode current collector and a negative electrode mixture layer formed on a surface of the negative electrode current collector, the negative electrode mixture layer contains: a negative electrode active material including a carbon-based active material and a silicon-based active material; and carbon nanotube, and a G/D ratio obtained by Raman spectrometry of the carbon nanotube is greater than or equal to 40 and less than or equal to 130.

ADVANTAGEOUS EFFECT OF INVENTION

According to the secondary battery of an aspect of the present disclosure, the charge-discharge cycle characteristics may be improved.

BRIEF DESCRIPTION OF DRAWINGS

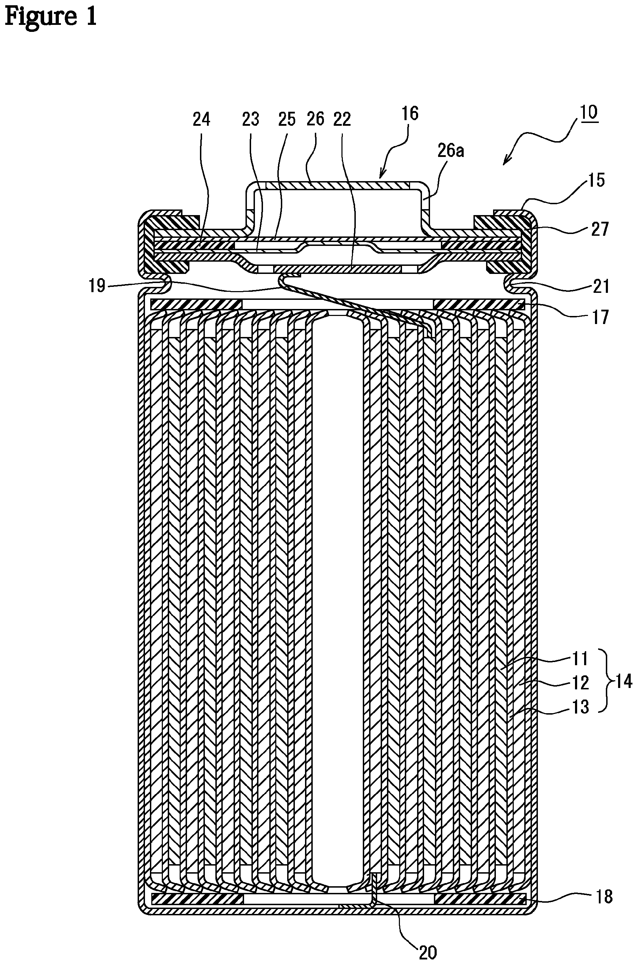

FIG. 1 is an axial sectional view of a non-aqueous electrolyte secondary battery of an example of an embodiment.

DESCRIPTION OF EMBODIMENTS

Hereinafter, an example of the embodiment of a non-aqueous electrolyte secondary battery according to the present disclosure will be described in detail. Hereinafter, a cylindrical battery housing a wound electrode assembly in a cylindrical exterior will be exemplified, but the electrode assembly is not limited to the wound electrode assembly, and may be a stacked electrode assembly in which a plurality of positive electrodes and a plurality of negative electrodes are alternately stacked one by one with a separator interposed therebetween. The shape of the exterior is not limited to the cylindrical shape, and may be, for example, a rectangular shape, a coin shape, or the like. The exterior may be a pouch composed of laminated sheets including a metal layer and a resin layer.

FIG. 1 is an axial sectional view of a cylindrical secondary battery 10 of an example of the embodiment. In the secondary battery 10 illustrated in FIG. 1, an electrode assembly 14 and a non-aqueous electrolyte (not illustrated) are housed in an exterior 15. The electrode assembly 14 has a wound structure in which a positive electrode 11 and a negative electrode 12 are wound with a separator 13 interposed therebetween. Hereinafter, for convenience of description, a sealing assembly 16 side will be described as the "upper side", and the bottom side of the exterior 15 will be described as the "lower side".

An upper end of the exterior 15 is capped with the sealing assembly 16 to seal an inside of the secondary battery 10. Insulating plates 17 and 18 are provided on the upper and lower sides of the electrode assembly 14, respectively. A positive electrode lead 19 extends upward through a through hole of the insulating plate 17, and is welded to the lower face of a filter 22, which is a bottom plate of the sealing assembly 16. In the secondary battery 10, a cap 26, which is a top plate of the sealing assembly 16 electrically connected to the filter 22, becomes a positive electrode terminal. On the other hand, a negative electrode lead 20 extends through a through hole of the insulating plate 18 toward the bottom side of the exterior 15, and is welded to a bottom inner face of the exterior 15. In the secondary battery 10, the exterior 15 becomes a negative electrode terminal. When the negative electrode lead 20 is provided on an outer end of winding, the negative electrode lead 20 extends through an outside of the insulating plate 18 toward the bottom side of the exterior 15, and welded with a bottom inner face of the exterior 15.

The exterior 15 is, for example, a bottomed cylindrical metallic exterior housing can. A gasket 27 is provided between the exterior 15 and the sealing assembly 16 to achieve sealability inside the secondary battery 10. The exterior 15 has a grooved portion 21 formed by, for example, pressing the side wall thereof from the outside to support the sealing assembly 16. The grooved portion 21 is preferably formed in a circular shape along a circumferential direction of the exterior 15, and supports the sealing assembly 16 with the gasket 27 interposed therebetween and with the upper face of the grooved portion 21.

The sealing assembly 16 has the filter 22, a lower vent member 23, an insulating member 24, an upper vent member 25, and the cap 26 that are stacked in this order from the electrode assembly 14 side. Each member constituting the sealing assembly 16 has, for example, a disk shape or a ring shape, and each member except for the insulating member 24 is electrically connected to each other. The lower vent member 23 and the upper vent member 25 are connected to each other at each of middle portions thereof, and the insulating member 24 is interposed between circumferences thereof. If the internal pressure of the battery increases due to abnormal heat generation, for example, the lower vent member 23 breaks and thereby the upper vent member 25 expands toward the cap 26 side to be separated from the lower vent member 23, resulting in cutting off of an electrical connection between both members. If the internal pressure further increases, the upper vent member 25 breaks, and gas is discharged through an opening 26a of the cap 26.

Hereinafter, the positive electrode 11, the negative electrode 12, the separator 13, and the non-aqueous electrolyte, which constitute the electrode assembly 14, particularly the negative electrode 12, will be described in detail.

[Positive Electrode]

The positive electrode 11 has, for example, a positive electrode current collector and a positive electrode mixture layer formed on a surface of the positive electrode current collector. The positive electrode mixture layer preferably formed on both surfaces of the positive electrode current collector. For the positive electrode current collector, a foil of a metal stable within a potential range of the positive electrode, such as aluminum, a film in which such a metal is disposed on a surface layer, or the like may be used. The positive electrode mixture layer includes, for example, a positive electrode active material, a binder, a conductive agent, and the like. The positive electrode 11 may be produced by, for example, applying a positive electrode slurry including the positive electrode active material, the binder, the conductive agent, and the like on the positive electrode current collector, drying the coating film to form the positive electrode mixture layer, and then rolling this positive electrode mixture layer.

Examples of the positive electrode active material may include a lithium-transition metal oxide containing a transition metal element such as Co, Mn, and Ni. The lithium-transition metal oxide is, for example, $Li_xCoO_2$, $Li_xNiO_2$, $Li_xMnO_2$, $Li_xCo_yNi_{1-y}O_2$, $Li_xCo_yM_{1-y}O_z$, $Li_xNi_{1-y}M_yO_z$, $Li_xMn_2O_4$, $Li_xMn_{2-y}M_yO_4$, $LiMPO_4$, and $Li_2MPO_4F$ (M; at least one of Na, Mg, Sc, Y, Mn, Fe, Co, Ni, Cu, Zn, Al, Cr, Pb, Sb, and B, $0 < x \leq 1.2$, $0 < y \leq 0.9$, and $2.0 \leq z \leq 2.3$). These may be used singly, or as a mixture thereof. In terms of attempting a higher capacity of the non-aqueous electrolyte secondary battery, the positive electrode active material preferably includes a lithium-nickel composite oxide such as $Li_xNiO_2$, $Li_xCo_yNi_{1-y}O_2$, and $Li_xNi_{1-y}M_yO_z$ (M; at least one of Na, Mg, Sc, Y, Mn, Fe, Co, Ni, Cu, Zn, Al, Cr, Pb, Sb, and B, $0 < x$

$\leq 1.2$, $0 < y \leq 0.9$, and $2.0 \leq z \leq 2.3$).

Examples of the conductive agent included in the positive electrode mixture layer may include carbon materials such as carbon black (CB), acetylene black (AB), Ketjenblack, carbon nanotube (CNT), graphene, and graphite. These may be used singly, or in combination of two or more.

Examples of the binder included in the positive electrode mixture layer may include fluororesins such as polytetrafluoroethylene (PTFE) and polyvinylidene fluoride (PVdF), polyacrylonitrile (PAN), polyimide resins, acrylic resins, and polyolefin resins. These may be used singly, or in combination of two or more. With these resins, carboxymethylcellulose (CMC) or a salt thereof, polyethylene oxide (PEO), and the like may be used in combination.

[Negative Electrode]

The negative electrode 12 has a negative electrode current collector and a negative electrode mixture layer formed on a surface of the negative electrode current collector. The negative electrode mixture layer is preferably formed on both surfaces of the negative electrode current collector. For the negative electrode current collector, a foil of a metal stable within a potential range of the negative electrode, such as copper, a film in which such a metal is disposed on a surface layer, or the like may be used.

The negative electrode mixture layer contains: a negative electrode active material including a carbon-based active material and a silicon-based active material; and carbon nanotube (CNT). The CNT functions as a conductive agent that achieves a conductive path in the negative electrode mixture layer. Examples of the carbon-based active material may include graphite. The graphite may be any of: a natural graphite such as flake graphite, massive graphite, and amorphous graphite; and an artificial graphite such as massive artificial graphite and graphitized mesophase-carbon microbead. These may be used singly, or in combination of two or more.

Examples of the silicon-based active material may include: a Si oxide represented by $SiO_x$ ($0.5 \leq x \leq 2.0$); a Si-containing compound in which Si fine particles are dispersed in a lithium silicate phase represented by $Li_{2y}SiO_{(2+y)}$ ($0 < y < 2$); and a Si-C composite in which Si fine particles are dispersed in a carbon phase. These may be used singly, or in combination of two or more.

A content of the silicon-based active material in the negative electrode mixture layer is preferably greater than or equal to 8 mass% and less than or equal to 20 mass% relative to a total mass of the negative electrode active material. This may improve the battery capacity. When the content of the silicon-based active material is high, the conductive path in the negative electrode mixture layer is likely to be lost with repeated charge and discharge to deteriorate the cycle characteristics of the battery. However, as described later, the negative electrode mixture layer containing CNT having a predetermined range of a G/D ratio may improve the cycle characteristics.

An average particle diameter (D50, median diameter on a volumetric basis) of the carbon-based active material is, for example, greater than or equal to 5 $\mu$m and less than or equal to 40 $\mu$m, and D50 of the silicon-based active material is, for example, greater than or equal to 2 $\mu$m and less than or equal to 20 $\mu$m. When the average particle diameters of the carbon-based active material and silicon-based active material are within the above ranges, side reactions between the active material and the electrolyte liquid and the loss of the conductive path in the negative electrode mixture layer may be more effectively inhibited. The D50 means a particle diameter at which a cumulative frequency is 50% from a smaller particle diameter side in a particle size distribution on a volumetric basis. The particle size distributions of the carbon-based active material and silicon-based active material may be measured by using a laser diffraction-type particle size distribution measuring device (for example, MT3000II, manufactured by MicrotracBEL Corp.) with water as a dispersion medium.

The negative electrode active material may include an active material other than the carbon-based active material and the silicon-based active material. Examples of the active material other than the carbon-based active material and the silicon-based active material may include a metal that forms an alloy with Li, such as Sn, a metal compound including Sn and the like, and a lithium-titanium composite oxide.

A G/D ratio obtained by Raman spectrometry of the carbon nanotube (CNT) contained in the negative electrode mixture layer is greater than or equal to 40 and less than or equal to 130. This may improve the cycle characteristics of the battery. Although a detail of the mechanism is unclear, the G/D ratio indicates a crystal ratio, and thereby it is presumed that an appropriate amount of structural defects in CNT is required in order to achieve the conductive path in the negative electrode mixture layer. It is presumed that a G/D ratio of lower than 40 decreases conductive efficiency of CNT due to the excessively many structural defects to deteriorate the cycle characteristics, and a G/D ratio of higher than 130 makes characteristics as the carbon remarkable, increases side reactions between CNT and the electrolyte liquid, and deteriorates the cycle characteristics.

The G/D ratio refers to a ratio of a peak intensity of a G-Band (greater than or equal to 1550 cm$^{-1}$ and less than or equal to 1600 cm$^{-1}$) to a peak intensity of a D-Band (greater than or equal to 1300 cm$^{-1}$ and less than or equal to 1350 cm$^{-1}$) in the Raman spectrum. CNT having a high G/D ratio has high crystallinity.

The Raman spectrum on CNT may be measured by using a Raman spectrometer (for example, NRS-5500, manufactured by JASCO Corporation). For example, CNT is fractioned on a slide, and planarized by using a spatula to prepare a sample, and the sample is subjected to the measurement. The measurement conditions are as follows, for example.

Measurement time: 5 seconds
Number of Scans: 2
OD of dimmer filter: 0.3
Magnification of objective lens: 100
Measurement range: greater than or equal to 950 cm$^{-1}$ and less than or equal to 1900 cm$^{-1}$

A content of the carbon nanotube (CNT) in the negative electrode mixture layer is preferably greater than or equal to 0.01 mass% and less than or equal to 0.1 mass%, and more preferably greater than or equal to 0.01 mass% and less than or equal to 0.05 mass% relative to a total mass of the negative electrode active material. This range may sufficiently achieve the content of the negative electrode active material in the negative electrode mixture layer, and thereby the cycle characteristics may be improved without a decrease in the battery capacity.

Examples of the carbon nanotube (CNT) contained in the negative electrode mixture layer may include a single-wall carbon nanotube (SWCNT) and a multiwall carbon nanotube (MWCNT). The CNT contained in the negative electrode mixture layer is preferably SWCNT. The CNT contained in the negative electrode mixture layer may be a combination of SWCNT and MWCNT.

A diameter of SWCNT is, for example, greater than or equal to 0.1 nm and less than or equal to 2 nm. A length of SWCNT is, for example, greater than or equal to 0.1 $\mu$m and less than or equal to 200 $\mu$m. Here, the diameter of SWCNT is calculated by measuring diameters of 10 SWCNTs by using a transmission electron microscope (TEM) to average the measured diameters. The length of SWCNT is calculated by measuring lengths of 10 SWCNTs by using a scanning electron microscope (SEM) to average the measured lengths. A diameter of MWCNT is, for example, greater than or equal to 3 nm and less than or equal to 100 nm. A length of MWCNT is, for example, greater than or equal to 0.1 $\mu$m and less than or equal to 200 $\mu$m. The diameter and length of MWCNT may be calculated by the method same as for SWCNT.

The negative electrode mixture layer may contain a conductive agent other than CNT. Examples of the conductive agent other than CNT include carbon materials such as carbon black (CB), acetylene black (AB), Ketjenblack, and graphite. These may be used singly, or in combination of two or more.

The negative electrode mixture layer may further contain a thickener, a binder, and the like. As the binder included in the negative electrode mixture layer, a fluororesin such as PTFE or PVdF, PAN, PI, an acrylic resin, a polyolefin resin, or the like may be used as in the case of the positive electrode 11, but styrene-butadiene rubber (SBR) is preferably used. The negative electrode mixture layer may include CMC or a salt thereof, polyacrylic acid (PAA) or a salt thereof, polyvinyl alcohol (PVA), or the like.

The negative electrode 12 may be produced by, for example, applying a negative electrode slurry, in which the negative electrode active material, CNT, the thickener, and the binder are dispersed at a predetermined mass ratio in water, on the negative electrode current collector, and drying and subsequently rolling the coating to form the negative electrode mixture layers on both surfaces of the negative electrode current collector.

[Separator]

For the separator, a porous sheet having an ion permeation property and an insulation property is used. Specific examples of the porous sheet include a fine porous thin film, a woven fabric, and a nonwoven fabric. As a material for the separator, a polyolefin such as polyethylene or polypropylene, cellulose, or the like is preferable. The separator may have any of a single-layered structure and a multi-layered structure. On a surface of the separator, a resin layer having high heat resistance, such as an aramid resin, and a filler layer including a filler of an inorganic compound may be provided.

[Non-Aqueous Electrolyte]

The non-aqueous electrolyte includes a non-aqueous solvent and an electrolyte salt dissolved in the non-aqueous solvent. For the non-aqueous solvent, any of esters, ethers, nitriles such as acetonitrile, and amides such as dimethylformamide, a mixed solvent of two or more thereof, or the like may be used, for example. The non-aqueous solvents may contain a halogen-substituted derivative in which the hydrogen atoms of these solvents are at least partially replaced with a halogen atom such as fluorine. Examples of the halogen-substituted derivative include fluorinated cyclic carbonates such as fluoroethylene carbonate (FEC), fluorinated chain carbonates, and fluorinated chain carboxylates such as methyl fluoropropionate (FMP).

Examples of the esters include: cyclic carbonates such as ethylene carbonate (EC), propylene carbonate (PC), and butylene carbonate; chain carbonates such as dimethyl carbonate (DMC), ethyl methyl carbonate (EMC), diethyl carbonate (DEC), methyl propyl carbonate, ethyl propyl carbonate, and methyl isopropyl carbonate; cyclic carboxylates such as $\gamma$-butyrolactone (GBL) and $\gamma$-valerolactone (GVL); and chain carboxylates such as methyl acetate, ethyl acetate, propyl acetate, methyl propionate (MP), and ethyl propionate.

Examples of the ethers include: cyclic ethers such as 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineole, and a crown ether; and chain ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl ether.

The electrolyte salt is preferably a lithium salt. Examples of the lithium salt include $LiBF_4$, $LiClO_4$, $LiPF_6$, $LiAsF_6$, $LiSbF_6$, $LiAlCl_4$, LiSCN, $LiCF_3SO_3$, $LiCF_3CO_2$, $Li(P(C_2O_4)F_4)$, $LiPF_{6-x}(C_nF_{2n+1})_x$ (1 < x < 6, and n represents 1 or 2), $LiB_{10}Cl_{10}$, LiCl, LiBr, LiI, lithium chloroborane, a lithium lower aliphatic carboxylate, borate salts such as $Li_2B_4O_7$ and $Li(B(C_2O_4)F_2)$, and imide salts such as $LiN(SO_2CF_3)_2$ and $LiN(C_1F_{2l+1}SO_2)(C_mF_{2m+1}SO_2)$ {l and m represent integers of 0 or more}. These lithium salts may be used singly, or as a mixture thereof. Among them, $LiPF_6$ is preferably used from the viewpoints of ion conductivity, electrochemical stability, and the like. A concentration of the lithium salt is preferably, for example, greater than or equal to 0.8 mol and less than or equal to 1.8 mol per litter of the non-aqueous solvent.

EXAMPLES

Hereinafter, the present disclosure will be further described with Examples, but the present disclosure is not limited to these Examples.

<Example 1>

[Production of Negative Electrode]

A mixture of graphite and SiO at a mass ratio of 90:10 was used as a negative electrode active material. Mixing 100 parts by mass of the negative electrode active material, 1 part by mass of carboxymethylcellulose (CMC), 1 part by mass of polyacrylic acid (PAA), and 1 part by mass of styrene-butadiene rubber (SBR) was performed. Further, carbon nanotube (CNT) having a G/D ratio of 10 was added at 0.01 mass% relative to a mass of the negative electrode active material, and an appropriate amount of water was added to prepare a negative electrode slurry. This negative electrode slurry was applied on both surfaces of a negative electrode current collector made of copper foil with 8 $\mu$m in thickness, the coating was dried, and then rolled with a roller so that a thickness of a negative electrode was 0.117 mm, and cut to 58.0 mm in width and 900 mm in length to produce a negative electrode. On the negative electrode, a negative electrode current collector's exposed portion for connecting a negative electrode lead was provided on one end in a width direction.

[Preparation of Non-Aqueous Electrolyte]

Into 100 parts by mass of a mixed solvent in which ethylene carbonate (EC), ethyl methyl carbonate (EMC), and dimethyl carbonate (DMC) were mixed at a volume ratio of 25:5:70, 2 parts by mass of fluoroethylene carbonate (FEC) was added to produce a non-aqueous solvent. Into this non-aqueous solvent, lithium hexafluorophosphate ($LiPF_6$) was dissolved at a concentration of 1.5 mol/L to prepare a non-aqueous electrolyte.

[Production of Test Cell]

To evaluate the negative electrode, a bipolar test cell constituted of a working electrode and a counter electrode was produced as follows. First, a negative electrode lead was connected to the negative electrode current collector's exposed portion of the negative electrode to produce the working electrode. Then, a Ni lead was connected to a lithium metal foil to produce a counter electrode. The working electrode and the counter electrode were disposed opposite to each other across a separator to constitute an electrode assembly, and this electrode assembly was housed in an exterior formed of an aluminum laminated film. The non-aqueous electrolyte was injected into the exterior, and then the exterior was sealed to produce a test cell. Hereinafter, charge and discharge of the test cell respectively correspond to charge and discharge of the negative electrode, which is the working electrode, and a voltage (V) corresponds to a potential of the working electrode relative to the Li metal (vs. Li⁺/Li).

[Evaluation of Capacity Retention]

Under an environment temperature of 25°C, the test cell was charged at a constant current of 0.1 C until 0.05 V, then charged at a constant current of 0.05 C until 0.05 V, and further charged at a constant current of 0.01 C until 0.05 V. Thereafter, the test cell was discharged at a constant current of 0.1 C until 1.0 V, then discharged at a constant current of 0.05 C until 1.0 V, and further discharged at a constant current of 0.01 C until 1.0 V. This charge and discharge was specified as one cycle, and 10 cycles were performed. A capacity retention in the charge-discharge cycle of the test cell was determined with the following formula.

$$\text{Capacity Retention (\%)} = (\text{Discharge Capacity at 10th Cycle} / \text{Discharge Capacity at 1st Cycle}) \times 100$$

<Example 2>

A test cell was produced and evaluated in the same manner as in Example 1 except that, in the production of the negative electrode, CNT having a G/D ratio of 40 was used instead of the CNT having a G/D ratio of 10.

<Example 3>

A test cell was produced and evaluated in the same manner as in Example 1 except that, in the production of the negative electrode, CNT having a G/D ratio of 60 was used instead of the CNT having a G/D ratio of 10.

<Example 4>

A test cell was produced and evaluated in the same manner as in Example 1 except that, in the production of the negative electrode, CNT having a G/D ratio of 90 was used instead of the CNT having a G/D ratio of 10.

<Example 5>

A test cell was produced and evaluated in the same manner as in Example 1 except that, in the production of the negative electrode, CNT having a G/D ratio of 130 was used instead of the CNT having a G/D ratio of 10.

<Example 6>

A test cell was produced and evaluated in the same manner as in Example 1 except that, in the production of the negative electrode, CNT having a G/D ratio of 150 was used instead of the CNT having a G/D ratio of 10.

<Example 7>

A test cell was produced and evaluated in the same manner as in Example 1 except that, in the production of the negative electrode, the amount of CNT added relative to the mass of the negative electrode active material was changed to 0.02 mass%.

<Example 8>

A test cell was produced and evaluated in the same manner as in Example 7 except that, in the production of the negative electrode, CNT having a G/D ratio of 40 was used instead of the CNT having a G/D ratio of 10.

<Example 9>

A test cell was produced and evaluated in the same manner as in Example 7 except that, in the production of the negative electrode, CNT having a G/D ratio of 60 was used instead of the CNT having a G/D ratio of 10.

<Example 10>

A test cell was produced and evaluated in the same manner as in Example 7 except that, in the production of the negative electrode, CNT having a G/D ratio of 90 was used instead of the CNT having a G/D ratio of 10.

<Example 11>

A test cell was produced and evaluated in the same manner as in Example 7 except that, in the production of the negative electrode, CNT having a G/D ratio of 130 was used instead of the CNT having a G/D ratio of 10.

<Example 12>

A test cell was produced and evaluated in the same manner as in Example 7 except that, in the production of the negative electrode, CNT having a G/D ratio of 150 was used instead of the CNT having a G/D ratio of 10.

<Example 13>

A test cell was produced and evaluated in the same manner as in Example 1 except that, in the production of the negative electrode, the amount of CNT added relative to the mass of the negative electrode active material was changed to 0.04 mass%.

<Example 14>

A test cell was produced and evaluated in the same manner as in Example 13 except that, in the production of the negative electrode, CNT having a G/D ratio of 40 was used instead of the CNT having a G/D ratio of 10.

<Example 15>

A test cell was produced and evaluated in the same manner as in Example 13 except that, in the production of the negative electrode, CNT having a G/D ratio of 60 was used instead of the CNT having a G/D ratio of 10.

<Example 16>

A test cell was produced and evaluated in the same manner as in Example 13 except that, in the production of the negative electrode, CNT having a G/D ratio of 90 was used instead of the CNT having a G/D ratio of 10.

<Example 17>

A test cell was produced and evaluated in the same manner as in Example 13 except that, in the production of the negative electrode, CNT having a G/D ratio of 130 was used instead of the CNT having a G/D ratio of 10.

<Example 18>

A test cell was produced and evaluated in the same manner as in Example 13 except that, in the production of the negative electrode, CNT having a G/D ratio of 150 was used instead of the CNT having a G/D ratio of 10.

<Example 19>

A test cell was produced and evaluated in the same manner as in Example 1 except that, in the production of the negative electrode, the amount of CNT added relative to the mass of the negative electrode active material was changed to 0.05 mass%.

<Example 20>

A test cell was produced and evaluated in the same manner as in Example 19 except that, in the production of the negative electrode, CNT having a G/D ratio of 40 was used instead of the CNT having a G/D ratio of 10.

<Example 21>

A test cell was produced and evaluated in the same manner as in Example 19 except that, in the production of the negative electrode, CNT having a G/D ratio of 60 was used instead of the CNT having a G/D ratio of 10.

<Example 22>

A test cell was produced and evaluated in the same manner as in Example 19 except that, in the production of the negative electrode, CNT having a G/D ratio of 90 was used instead of the CNT having a G/D ratio of 10.

<Example 23>

A test cell was produced and evaluated in the same manner as in Example 19 except that, in the production of the negative electrode, CNT having a G/D ratio of 130 was used instead of the CNT having a G/D ratio of 10.

<Example 24>

A test cell was produced and evaluated in the same manner as in Example 19 except that, in the production of the negative electrode, CNT having a G/D ratio of 150 was used instead of the CNT having a G/D ratio of 10.

<Example 25>

A test cell was produced and evaluated in the same manner as in Example 1 except that, in the production of the negative electrode, the amount of CNT added relative to the mass of the negative electrode active material was changed to 0.1 mass%.

<Example 26>

A test cell was produced and evaluated in the same manner as in Example 25 except that, in the production of the negative electrode, CNT having a G/D ratio of 40 was used instead of the CNT having a G/D ratio of 10.

<Example 27>

A test cell was produced and evaluated in the same manner as in Example 25 except that, in the production of the negative electrode, CNT having a G/D ratio of 60 was used instead of the CNT having a G/D ratio of 10.

<Example 28>

A test cell was produced and evaluated in the same manner as in Example 25 except that, in the production of the negative electrode, CNT having a G/D ratio of 90 was used instead of the CNT having a G/D ratio of 10.

<Example 29>

A test cell was produced and evaluated in the same manner as in Example 25 except that, in the production of the negative electrode, CNT having a G/D ratio of 130 was used instead of the CNT having a G/D ratio of 10.

<Example 30>

A test cell was produced and evaluated in the same manner as in Example 25 except that, in the production of the negative electrode, CNT having a G/D ratio of 150 was used instead of the CNT having a G/D ratio of 10.

<Example 31>

A test cell was produced and evaluated in the same manner as in Example 1 except that, in the production of the negative electrode, no CNT was added.
The evaluation results of the test cells according to Examples 1 to 30 are shown, separately by the amount of CNT added, in Tables 1 to 5. Tables 1 to 5 respectively show, relative to the capacity retention of each of Examples 1, 7, 13, 19, and 25 being 100, capacity retention of the other Examples. Table 6 shows the evaluation results of Examples 4, 10, 16, 22, and 28, which had the G/D ratio was 90, and Example 31. Table 6 shows, relative to the capacity retention of Example 31 being 100, the capacity retention of the other Examples. Tables 1 to 6 also show the amount added and G/D ratio of CNT.

[Table 1]

|  | CNT | | Capacity retention |
|---|---|---|---|
|  | Content (mass%) | G/D ratio |  |
| Example 1 | 0.01 | 10 | 100.0 |
| Example 2 | 0.01 | 40 | 103.7 |
| Example 3 | 0.01 | 60 | 104.2 |
| Example 4 | 0.01 | 90 | 104.3 |
| Example 5 | 0.01 | 130 | 100.5 |
| Example 6 | 0.01 | 150 | 99.8 |

[Table 2]

|  | CNT | | Capacity retention |
|---|---|---|---|
|  | Content (mass%) | G/D ratio |  |
| Example 7 | 0.02 | 10 | 100.0 |
| Example 8 | 0.02 | 40 | 103.8 |
| Example 9 | 0.02 | 60 | 104.2 |
| Example 10 | 0.02 | 90 | 104.4 |
| Example 11 | 0.02 | 130 | 100.5 |
| Example 12 | 0.02 | 150 | 99.6 |

[Table 3]

|  | CNT | | Capacity retention |
|---|---|---|---|
|  | Content (mass%) | G/D ratio |  |
| Example 13 | 0.04 | 10 | 100.0 |
| Example 14 | 0.04 | 40 | 103.8 |
| Example 15 | 0.04 | 60 | 104.3 |
| Example 16 | 0.04 | 90 | 104.5 |
| Example 17 | 0.04 | 130 | 100.6 |
| Example 18 | 0.04 | 150 | 99.6 |

[Table 4]

|  | CNT | | Capacity retention |
|---|---|---|---|
|  | Content (mass%) | G/D ratio |  |
| Example 19 | 0.05 | 10 | 100.0 |
| Example 20 | 0.05 | 40 | 102.7 |
| Example 21 | 0.05 | 60 | 102.9 |

(continued)

|  | CNT | | Capacity retention |
|---|---|---|---|
|  | Content (mass%) | G/D ratio |  |
| Example 22 | 0.05 | 90 | 102.9 |
| Example 23 | 0.05 | 130 | 100.3 |
| Example 24 | 0.05 | 150 | 99.9 |

[Table 5]

|  | CNT | | Capacity retention |
|---|---|---|---|
|  | Content (mass%) | G/D ratio |  |
| Example 25 | 0.1 | 10 | 100.0 |
| Example 26 | 0.1 | 40 | 100.9 |
| Example 27 | 0.1 | 60 | 101.4 |
| Example 28 | 0.1 | 90 | 101.3 |
| Example 29 | 0.1 | 130 | 100.3 |
| Example 30 | 0.1 | 150 | 100.0 |

[Table 6]

|  | CNT | | Capacity retention |
|---|---|---|---|
|  | Content (mass%) | G/D ratio |  |
| Example 4 | 0.01 | 90 | 104.6 |
| Example 10 | 0.02 | 90 | 105.0 |
| Example 16 | 0.04 | 90 | 105.2 |
| Example 22 | 0.05 | 90 | 103.2 |
| Example 28 | 0.1 | 90 | 101.4 |
| Example 31 | 0 | - | 100.0 |

In all of Tables 1 to 5, Examples containing CNT having the G/D ratio of greater than or equal to 40 and less than or equal to 130 improved the cycle characteristics as compared with Examples containing CNTs having the G/D ratios of 10 and 150. Example containing CNT having the G/D ratio of greater than or equal to 40 and less than or equal to 90 remarkably improved the cycle characteristics. In Table 6, Examples containing CNT all improved the cycle characteristics as compared with Example 31, which contained no CNT. In particular, Examples 4, 10, 16, and 22, which had the CNT content relative to the mass of the negative electrode active material being within a range of greater than or equal to 0.01% and less than or equal to 0.05%, remarkably improved the cycle characteristics.

REFERENCE SIGNS LIST

10 secondary battery, 11 positive electrode, inner end of winding, 12 negative electrode, 13 separator, 14 electrode assembly, 15 exterior, 16 sealing assembly, 17, 18 insulating plate, 19 positive electrode lead, 20 negative electrode lead, 21 grooved portion, 22 filter, 23 lower vent member, 24 insulating member, 25 upper vent member, 26 cap, 26a opening, 27 gasket

**Claims**

1. A non-aqueous electrolyte secondary battery, comprising:

    an electrode assembly including a positive electrode and a negative electrode; and
    an exterior housing the electrode assembly and a non-aqueous electrolyte, wherein
    the negative electrode has a negative electrode current collector and a negative electrode mixture layer formed on a surface of the negative electrode current collector,
    the negative electrode mixture layer contains: a negative electrode active material including a carbon-based active material and a silicon-based active material; and carbon nanotube, and
    a G/D ratio obtained by Raman spectrometry of the carbon nanotube is greater than or equal to 40 and less than or equal to 130.

2. The non-aqueous electrolyte secondary battery according to claim 1, wherein a content of the carbon nanotube in the negative electrode mixture layer is greater than or equal to 0.01 mass% and less than or equal to 0.1 mass% relative to a total mass of the negative electrode active material.

3. The non-aqueous electrolyte secondary battery according to claim 1 or 2, wherein a content of the silicon-based active material in the negative electrode mixture layer is greater than or equal to 8 mass% and less than or equal to 20 mass% relative to a total mass of the negative electrode active material.

# Figure 1

## INTERNATIONAL SEARCH REPORT

| International application No. |
| --- |
| **PCT/JP2022/017158** |

| A. | CLASSIFICATION OF SUBJECT MATTER |
| --- | --- |

*H01M 4/13*(2010.01)i; *H01M 4/133*(2010.01)i; *H01M 4/36*(2006.01)i; *H01M 4/38*(2006.01)i; *H01M 4/48*(2010.01)i; *H01M 4/587*(2010.01)i; *H01M 4/62*(2006.01)i
FI:   H01M4/13; H01M4/62 Z; H01M4/36 E; H01M4/38 Z; H01M4/48; H01M4/587; H01M4/133

According to International Patent Classification (IPC) or to both national classification and IPC

| B. | FIELDS SEARCHED |
| --- | --- |

Minimum documentation searched (classification system followed by classification symbols)

H01M4/13; H01M4/133; H01M4/36; H01M4/38; H01M4/48; H01M4/587; H01M4/62

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 107946561 A (SHENZHEN BAK BATTERY CO., LTD.) 20 April 2018 (2018-04-20) claims 1-2, 5, 9, paragraphs [0008], [0012], [0029]-[0034] | 1-2 |
| A | | 3 |
| Y | KR 10-2021-0001708 A (LG CHEM. LTD.) 06 January 2021 (2021-01-06) claims, paragraphs [0022]-[0165] | 1-3 |
| Y | CN 109950510 A (ZHUHAI GUANYU BATTERY CO., LTD.) 28 June 2019 (2019-06-28) claims, paragraphs [0004], [0007]-[0063] | 1-3 |
| A | JP 2016-110876 A (SAMSUNG SDI CO., LTD.) 20 June 2016 (2016-06-20) | 1-3 |
| A | JP 2014-67581 A (SANYO ELECTRIC CO., LTD.) 17 April 2014 (2014-04-17) | 1-3 |

☐ Further documents are listed in the continuation of Box C.     ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **10 June 2022** | **21 June 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2022/017158**

| Patent document cited in search report | | | Publication date (day/month/year) | Patent family member(s) | | | Publication date (day/month/year) |
|---|---|---|---|---|---|---|---|
| CN | 107946561 | A | 20 April 2018 | (Family: none) | | | |
| KR | 10-2021-0001708 | A | 06 January 2021 | WO | 2020/262890 | A1 | |
| CN | 109950510 | A | 28 June 2019 | (Family: none) | | | |
| JP | 2016-110876 | A | 20 June 2016 | KR | 10-2016-0069458 | A | |
| JP | 2014-67581 | A | 17 April 2014 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017007013 A